# EUROPÄISCHE PATENTSCHRIFT

(11) **EP 1 950 583 B1**
(45) Veröffentlichungstag und Bekanntmachung des Hinweises auf die Patenterteilung: **26.02.2014**
(21) Anmeldenummer: 07123453.8
(22) Anmeldetag: 18.12.2007
(51) Int. Cl.: G01S 17/89, B60R 1/00

(54) **Nachtsichtsystem, insbesondere für ein Fahrzeug, und Verfahren zum Erstellen eines Nachtsichtbildes**
Night vision system, in particular for a vehicle and method for producing a night vision image
Système d'éclairage nocturne, en particulier pour un véhicule et procédé d'établissement d'une image d'éclairage nocturne

(30) Priorität: 29.01.2007 DE 102007004349
(43) Veröffentlichungstag der Anmeldung: 30.07.2008
(73) Patentinhaber: ROBERT BOSCH GMBH, 70442 Stuttgart (DE)
(72) Erfinder: Wuerz-Wessel, Alexander, 70599 Stuttgart (DE); Nixdorf, Bernhard, 70469 Stuttgart (DE); Lorei, Marcus, 71287 Weissach-Flacht (DE)

(56) Entgegenhaltungen:
- WO-A-98/10255
- WO-A-2004/021546
- WO-A-2005/026774
- WO-A-2007/036553
- DE-A1- 10 131 720
- DE-A1- 10 242 262
- US-B1- 6 456 793

## Beschreibung

Die Erfindung betrifft ein Kamerasystem, z.B. Nachtsichtsystem, insbesondere für ein Fahrzeug, und Verfahren zum Erstellen von Bildern.

### Stand der Technik

In Fahrzeugen werden Nachtsichtsysteme eingesetzt, um dem Fahrer einen besseren Überblick über eine schlecht beleuchtete Straßenszene zu ermöglichen. Hierzu ist es bekannt, die Szene vor dem Fahrzeug kontinuierlich mit einer Leistung von z. B. ca. 50 Watt im Nahinfrarotbereich (NIR) zwischen ca. 400 und 1400 nm mit einem Maximum bei z. B. 900 nm zu beleuchten und mittels einer NIR-empfindlichen monokularen Kamera ein Bild aufzuzeichnen, das nachfolgend bearbeitet und dem Fahrer auf einem Bildschirm dargestellt wird.

Die Kamera weist im Allgemeinen einen Imager-Chip auf, auf dessen Oberseite eine Matrixanordnung von IR-sensitiven Imager-Pixeln (Bildaufnahme-Pixeln) ausgebildet ist, wobei eine Optikeinrichtung des Kamerasystems einen im Wesentlichen kegelförmigen Bildbereich vor und gegebenenfalls neben dem Fahrzeug erfasst und auf die Matrixanordnung von Imager-Pixeln abbildet, die nachfolgend entsprechend ausgelesen werden.

Zur Ermittlung von Entfernungen bzw. Bildtiefen im Nahbereich sind PMD (Photomischdetektor, photo mixer device)-Kameras bekannt. Hierbei wird Infrarot-Strahlung, z. B. im Nah-Infrarotbereich bei 870 nm, für Laufzeitmessungen verwendet, wobei aus der Phasendifferenz zwischen der ausgesandten und empfangenen IR-Strahlung auf den Abstand geschlossen werden kann. Hierbei wird die auszusendende IR-Strahlung mit einer Modulationsfrequenz von z. B. 20 MHz moduliert und ausgesendet: Die von Objekten, z. B. auch der Fahrbahn, reflektierte Strahlung nachfolgend von PMD-Zellen aufgenommen. Die PMD-Zellen sind hierbei im Allgemeinen in CMOS-Technologie hergestellt und werden nahe dem Sättigungsbereich betrieben. Um Uneindeutigkeiten bzw. mathematische Vielfachlösungen auszuschließen, wird im Allgemeinen mehr als eine Modulationsfrequenz verwendet. Die von den aufgenommenen Photonen der IR-Strahlung erzeugten Elektronen werden noch im lichtempfindlichen Halbleiterbereich der PMD-Zellen mit Hilfe einer so genannten Ladungsträgerschaukel selektiv getrennt, wozu ein mit der Modulation der IR-Strahlung gekoppeltes Referenzsignal verwendet wird. Die PMD-Zellen liefern somit ein Helligkeitsbildsignal mit Entfernungsinformationen.

Eine Schwierigkeit des PMD liegt hierbei in der Entwicklung großflächiger Imager, um größere Bereiche mit höherer Auflösung beobachten zu können. Darüber hinaus wird eine PMD-CMOS-Zelle nahe ihrer Sättigung gefahren, um eine möglichst gute dreidimensionale Messung zu ermöglichen. Hierdurch leidet jedoch der Kontrast im Grauwertbereich. Es ergibt sich somit ein Bild mit sehr hohem Kontrast, d.h. geringer Grauwertabstufung, und relativ geringer Auflösung, so dass eine übliche Bildverarbeitung schwierig ist.

Die DE 100 02 069 A1 beschreibt eine Anordnung zur Verbesserung der Sicht in Fahrzeugen, bei der eine Beleuchtungsoptik permanent gepulste Infrarot-Licht abstrahlt und eine Empfangsoptik reflektierte Anteile des abgestrahlten Lichtes empfängt. Die IR-Strahlung wird von einer CCD-Kamera des Fahrzeuges aufgenommen und auf einem Bildschirm nachfolgend als sichtbares Bild dargestellt. Hierbei wird der gepulste Betrieb der Laserdioden mit der Verschlusszeit der CCD-Kamera synchronisiert.

Die DE 40 07 646 A1 beschreibt eine weitere Anordnung mit einer Beleuchtungsoptik, Empfangsoptik und Darstellungsoptik. Hierbei kann ein Kamerabereich alternativ entweder durch eine zweidimensionale Strahlaufweitung eines Laserstrahls gleichzeitig ausgeleuchtet oder der Laserstrahl in nur einer Richtung bei gleichzeitiger enger Bündelung in der orthogonalen zweiten Richtung und Schwenken entlang eines Raumwinkels geführt oder ein gebündelter Laserstrahl in zwei Dimensionen zur Abtastung verstellt werden.

Die WO 2005/026774 A1 beschreibt ein Umgebungsüberwachungssystem mit einer Nachtsichteinheit und einer Entfernungseinheit, wobei ein gemeinsamer Sender zur Emission elektromagnetischer Wellen in das zu überwachende Zielgebiet vorgesehen ist, der mit alternierenden Beleuchtungsphasen und Beleuchtungspausen betrieben wird. In den Beleuchtungsphasen wird eine hochfrequente Impulsfolge ausgesendet, wobei das Nachtsichtsystem für die Bilddarstellung über mehrere derartige Impulse integriert.

Die WO 2004/021546 A2 beschreibt ein Verkehrsmittel mit einer 3D-Entfernungsbildkamera, wobei auf Seite 4 der Druckschrift kurz erwähnt wird, dass auch Entfernungsmessungen von Sensoren als PMD-Zellen bekannt sind.

Die DE 102 42 262 A1 beschreibt ein Stereo-Nachtsystem für Fahrzeuge, bei dem eine 3D-Darstellung durch Stereo-Aufnahme ermöglicht wird.

Die DE 10131 720 A1 beschreibt ein Head-up-Display, zur ortsgerechten Darstellung von Bildern in Abhängigkeit der Position des Kopfes des Benutzers.

### Offenbarung der Erfindung

Erfindungsgemäß ist vorgesehen, für die Entfernungs-Messung und das IR-Imager-Kamerasystem eine gemeinsame Beleuchtung, insbesondere eine integrierte Beleuchtung vorzusehen. Als Entfernungs-Messung kann insbesondere PMD eingesetzt werden.

Erfindungsgemäß wird die kontinuierliche Beleuchtung des Kamerasystems mit den hochfrequenten Signalen für die Tiefen-Messung überlagert.

Erfindungsgemäß entfällt somit der apparative Aufwand mehrerer Beleuchtungsmodule.

Hierbei können gemäß einer erfindungsgemäßen Ausbildung das PMD-System und das Nachtsichtsystem bezüglich der optischen Signalaufnahme und Auswertung der Daten zum einen getrennte Systeme darstellen, sodass die PMD-Kamera und die Nachtsichtkamera voneinander unabhängige Module darstellen, die z. B. auch an unterschiedlichen Stellen im Fahrzeug angebracht werden können und verschiedene Steuereinrichtungen aufweisen. Auch bei einer derartigen getrennte Ausbildung des PMD-Kamera-Moduls und des Nachtsichtmoduls können allerdings die gewonnen Daten für gemeinsame Funktionen ausgewertet werden, z. B. zur Anzeige von Entfernungsdaten bzw. Tiefeninformationen im Bild oder auch für eine Objekterkennung oder Objektklassifizierung, bei der z. B. Fahrbahnmarkierungen, Verkehrsschilder, Ampeln usw. erkannt werden können. Bei einer derartigen Auswertung des Bildes können ergänzend auch Gefahrensituationen durch mögliche Kollisionen mit Objekten überprüft und gegebenenfalls dem Fahrer signalisiert werden oder auch zu einem Eingriff in die Fahrdynamik oder das Bremssystem führen.

Anstelle einer Trennung der Module können gemäß einer anderen erfindungsgemäßen Ausbildung das PMD-Systems und das Nachtsichtsystem auch hardwaremäßig kombiniert werden. Hierbei ist es insbesondere vorteilhaft, auf dem Imager-Chip der Nachtsichtkamera mit seinen IR-sensitiven Imager-Pixeln die PMD-Zellen zu integrieren. Hierdurch können den Pixeln der Nachtsicht-Kamera, die ein hoch aufgelöstes Bild liefern, Tiefenangaben bzw. Entfernungsinformationen zugeordnet werden, die von den PMD-Signalen der PMD-Zellen geliefert werden bzw. sich aus einer Auswertung ergeben.

Bei dieser Ausführungsform wird somit eine direkte Kopplung der von den Imager-Pixeln ausgegebenen Imager-Bildsignale mit den Mess-Zellen-Signalen ermöglicht, da die Kreuzkorrelation der Signale durch die bekannte räumliche Anordnung der PMD-Zellen im Verhältnis zu den Imager-Pixeln und die bekannte Optikeinrichtung bekannt ist. Es wird somit ein hochaufgelöstes Bild aufgenommen, das an einigen Stellen Tiefenangaben bzw. Entfernungsangaben enthält, die als Stützstellen zur Erstellung einer dreidimensionalen Darstellung dienen können.

Hierbei wird erfindungsgemäß erkannt, dass sich die Imager-Bildaufnahme-Technologie und die PMD-Zellen-Technologie sehr gut ergänzen. Das Imager-Bild ist hoch aufgelöst und bietet einen guten Kontrast, so dass eine Vermessung von Objekten mit guter lateraler Auflösung möglich ist. Das niedrig aufgelöste PMD-Bild liefert hingegen insbesondere im Nahbereich gute Entfernungsdaten. Da beide Systeme auf in Prinzip gleichen Halbleiter-Technologien, nämlich CCD und/oder CMOS aufbaubar sind, können sie bereits hardwaremäßig auf einem gemeinsamen Halbleiterbauelement bzw. Chip integriert werden.

Die PMD-Zellen können zum einen regelmäßig über die Matrixanordnung der Imager-Pixel verteilt angeordnet sein, um eine gleichmäßige Rasterung des Bildbereichs zu ermöglichen. Da bei einem derartigen gleichmäßigen Raster sich jedoch bei z.B. Ersetzen jedes zwanzigsten Imager-Pixels durch eine PMD-Zelle Auflösungen des PMD-Bildes mit einem Winkelgrad ergeben, kann z.B. auf 25 m Entfernung ein Objekt mit einer geringeren Dimensionierung in Querrichtung oder vertikaler Richtung als 43 cm zeitweise nicht erfasst werden. Erfindungsgemäß wird hierbei erkannt, dass dies insbesondere ein Fußgänger sein könnte, der eine hohe Vertikalerstreckung von über 1,20 m, jedoch gegebenenfalls nur geringe laterale Erstreckungen aufweist. Daher können die PMD-Zellen gemäß einer Ausführungsform nicht in einer gleichmäßigen (Über-)Matrix, sondern im zueinander versetzten Zeilen angeordnet sein, so dass länglichere Objekte mit Vertikalerstreckung, die gegebenenfalls von einer Zeile der Mess-Zellen nicht erfasst werden, zumindest von benachbarten Zeilen erfasst werden können.

Erfindungsgemäß wird weiter erkannt, dass es für z.B. Fahrerassistenzsystem in der Regel ausreichend ist, wenn in einem bestimmten Bildbereich Tiefen gemessen werden können. Dies kann insbesondere der untere Bildbereich sein, da sich üblicherweise alle Objekte auf dem Boden bewegen und fliegende Objekte gar nicht oder kaum auftreten bzw. nicht relevant sind.

Somit können die PMD-Zellen ausschließlich oder schwerpunktsmäßig in einem Teilbereich des Imager-Chips angeordnet sein, und insbesondere zur Vermessung des unteren Bildbereichs dienen. Die PMD-Zellen können auch als geschlossenes Array bzw. eigene Matrix angrenzend an die Matrix der Imager-Pixel angeordnet sein. Insbesondere bei derartigen Anordnungen kann die eingesetzte Optik entsprechend angepasst werden, so dass die PMD-Zellen die für die Funktion interessanten Bereiche tiefenvermessen. Durch die fixe Integration der Imager-Pixel und PMD-Zellen auf einem Chip ist bei bekannter Optik automatisch die Kreuzkalibrierung zwischen dem Imager-Bild und dem PMD gegeben, so dass die vermessenen Tiefen immer Bildbereichen zugeordnet werden können.

Die in den Imager-Pixel-Array anstelle einiger Imager-Pixel eingesetzten PMD-Zellen liefern zunächst feste Muster im Bild, da die PMD-Zellen ein qualitativ schlechteres Bild und insbesondere auch eine geringere Auflösung aufweisen. Sie bilden insbesondere helle Flecken in dem Graustufenbild oder Farbbild, die je nach Größenverhältnis der Imager-Pixel zu den PMD-Zellen mehrere Pixel der Imager-Matrix ersetzen können. Hierzu kann erfindungsgemäß eine Tote-Pixel-Korrektur durch z.B. Interpolation aus den umliegenden Imager-Pixeln erfolgen. Hierzu kann auf sich bekannte Algorithmen zugegriffen werden, da auch handelsübliche Imager - gegebenenfalls nach einiger Zeit - nicht voll funktionsfähige Pixel, d.h. "tote Pixel" aufweisen, die kein entsprechendes Graustufenbild mehr liefern, sondern nicht mehr ansprechen und in dem Bild immer schwarz wären. Ein derartiges festes Muster wird bei bekannten Bildverarbeitungsalgorithmen erkannt und durch Tote-Pixel-Korrektur bearbeitet.

Derartige Bildverarbeitungsalgorithmen können erfindungsgemäß auch bei der Korrektur der Beeinflussung durch die eingesetzten PMD-Zellen herangezogen werden.

Erfindungsgemäß kann somit mit relativ geringem Aufwand, insbesondere Standard-Herstellungsverfahren, ein Imager-Halbleiterbauelement hergestellt werden, das eine gute optische Bildverarbeitung mit zusätzlicher Tiefenvermessung ermöglicht. Das gelieferte, auf einem Monitor darzustellende Bild kann qualitativ gleichwertig oder fast gleichwertig mit einem Imager-Bild ohne zusätzliche PMD-Zellen sein und zusätzlich für die Darstellung und Ermittlung der erfassten Objekte relevante Tiefeninformationen liefern.

Somit kann auch durch ein monokulares Kamerasystem erfindungsgemäß eine hochwertige Bildverarbeitung mit Tiefenangeben erreicht werden.

### Kurze Beschreibung der Zeichnungen

Fig. 1 zeigt eine Straßensituation eines Fahrzeuges mit einem erfindungsgemäßen Kamerasystem und weiteren Objekten;
Fig. 2 zeigt das erfindungsgemäße Kamerasystem gemäß dieser Ausführungsform;
Fig. 3 zeigt eine Aufsicht auf den Imager-Chip gemäß einer ersten Ausführungsform mit gleichmäßiger Matrix-Verteilung der Tiefenmess-Zellen auf dem Imager-Chip;
Fig. 4 zeigt eine Aufsicht auf den Imager-Chip gemäß einer weiteren Ausführungsform mit einer ungleichmäßigen Verteilung der Tiefenmess-Zellen des Imager-Chips;
Fig. 5a, b zeigt verschiedene versetzte Anordnungen der Tiefenmess-Zellen auf dem Imager-Chip gemäß einiger Ausführungsformen;
Fig. 6 zeigt eine Aufsicht auf den Imager-Chip gemäß einer weiteren Ausführungsform mit getrennten Bereichen der Bildaufnahmepixel und Tiefenmess-Zellen;
Fig. 7 zeigt eine zu den Figuren 2 bis 7 alternative Ausführungsform mit getrennten Modulen für die Imager-Kamera und die PMD-Kamera,
Fig. 8 zeigt ein Flussdiagramm eines erfindungsgemäßen Verfahrens.

### Beschreibung der Ausführungsformen

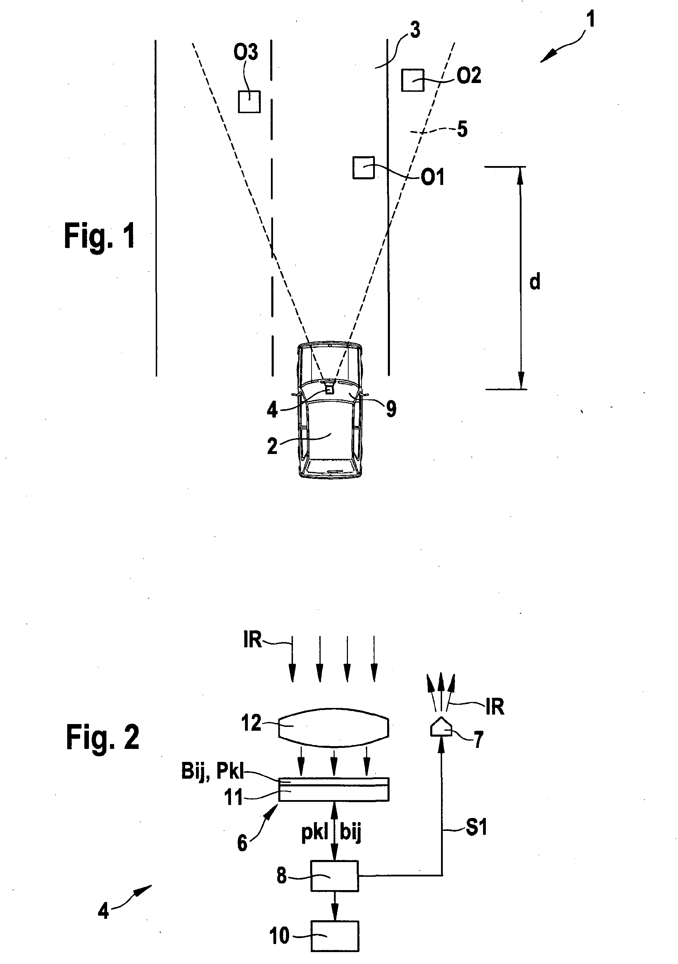

In einer Straßensituation 1 fährt gemäß Fig. 1 ein Fahrzeug 2 auf einer Fahrbahn 3. Das Fahrzeug 2 weist ein Kamerasystem 4 auf, das einen im Wesentlichen kegelförmigen optischen Erfassungsbereich (Kamerabereich) 5 vor und neben dem Fahrzeug 2 erfasst. Das Kamerasystem 4 erfasst in seinem Erfassungsbereich 5 in unterschiedlichen Entfernungen d seine Fahrbahn 3, und weiterhin verschiedene auf oder neben der Fahrbahn 3 sich befindende Objekte O1, O2, O3.

Gemäß der Ausführungsform der Figuren 2 bis 6 weist das erfindungsgemäße Kamerasystem 4 eine Optikeinrichtung 12, einen Imager-Chip 6, eine Infrarot (IR) -Beleuchtungseinrichtung 7 mit z.B. ein oder mehreren IR-LEDs, eine Steuereinrichtung 8 zur Ansteuerung der IR- Beleuchtungseinrichtung 7 mit ersten Signalen S1 und Aufnahme von Signalen bij und pkl von dem Imager-Chip 6 sowie eine Auswerteeinrichtung 10 auf. Die Steuereinrichtung 8 und die Auswerteeinrichtung 10 können hierbei als Steuergerät 8, 10 des Kamerasystem 4 kombiniert bzw. integriert sein. Die Optikeinrichtung 12 und der Imager-Chip 6 sind vorzugsweise hinter der Windschutzscheibe 9 angeordnet, die Beleuchtungseinrichtung 7 kann außerhalb der Windschutzscheibe angeordnet sein, z. B. im Bereich der Stoßfänger.

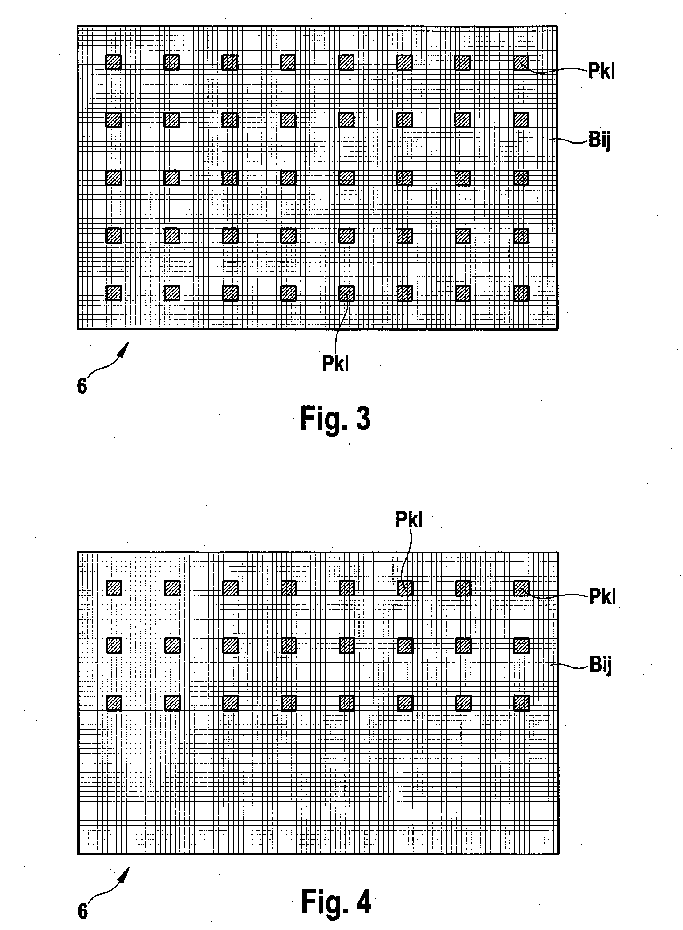

Auf dem gemeinsamen Substrat 11 des Imager-Chips 6 sind Imager-Pixel (Bildaufnahmepixel) Bij und PMD-Zellen Pkl ausgebildet, wobei die Fig. 3 bis 6 Aufsichten auf den Imager-Chip 6 mit unterschiedlichen Anordnungen der Imager-Pixel Bij und PMD-Zellen Pkl zeigen. Die Imager-Pixel Bij sind in an sich bekannter Weise in einer Matrixanordnung aus Zeilen und Spalten angeordnet und nehmen die von dem Erfassungsbereich 5 ausgesandte IR-Strahlung über eine Optikeinrichtung 12 gebündelt auf. Die Imager-Pixel Bij sind in CMOS oder CCD-Technologie ausgebildet und vorzugsweise im gleichen IR-Bereich wie die PMD-Zellen, vorzugsweise im Nah-Infrarotbereich, z. B. bei 870 nm, sensitiv.

Die Steuereinrichtung 8 steuert die IR-Beleuchtungseinrichtung 7 mit einem Ansteuersignal S1 derartig an, dass diese eine kontinuierliche IR- Beleuchtung mit einem modulierten IR-Signal überlagert in dem für die Imager-Pixel Bij und die PMD-Zellen PkI relevanten Wellenlängenbereich aussendet.

Die von der Beleuchtungseinrichtung 7 ausgestrahlte IR-Strahlung ermöglicht eine Beleuchtung in einem weiten Erfassungsbereich 5, ohne den Gegenverkehr oder andere Verkehrsteilnehmer zu blenden. Die Imager-Pixel Bij geben Imagerpixel-Signale (Bild-Signale) bij aus, aus denen die Auswereeinrichtung 10 nachfolgend ein auf einem Monitor ein Bild im sichtbaren Licht darstellt, das auch Grauwerte aufweisen kann. Neben der Anzeige auf dem Monitor ist auch eine Verarbeitung mittels Bildverarbeitungsalgorithmen möglich, um auf relevante Merkmale, z.B. die Fahrbahn 3 bzw. die für das Fahrzeug 3 relevante Spur und weiterhin Objekte 01, 02, 03, z. B. auch Fahrbahnmarkierungen, Verkehrsschilder, Ampeln usw.zu untersuchen. Bei einer derartigen Auswertung des Bildes können ergänzend auch Gefahrensituationen durch mögliche Kollisionen mit den Objekten O1, 02, 03 von der Auswerteeinrichtung 10 erkannt und gegebenenfalls dem Fahrer signalisiert werden oder auch zu einem Eingriff in die Fahrdynamik oder das Bremssystem führen.

Die PMD (Photomischdetektor, photo mixer device)-Zellen PkI detektieren die von der Infrarot-Beleuchtungseinrichtung 7 im Erfassungsbereich 5 reflektierte IR-Strahlung. Aufgrund der bei PMD-Zellen bekannten Technik der Unterdrückung der Hintergrundbeleuchtung (SBI, Supression of Background Illumination) stört der zusätzliche Anteil der kontinuierlichen IR-Strahlung, der zur Aufnahme für die Imager-Pixel Bij vorgesehen ist, nicht.

Auch die PMD-Zellen erfassen sowohl die von der Fahrbahn 3 als auch die von den Objekten 01, 02, 03 reflektierte IR-Strahlung. Die IR-Beleuchtungseinrichtung 7 sendet hierzu in an sich bekannter Weise modulierte Lichtsignale aus, z. B. IR-Strahlung mit einer Wellenlänge von 800 bis 2000 nm und zwei oder mehr Modulationsfrequenzen von etwa 20 MHz, die der kontinuierlichen Strahlung überlagert sind. Hierbei steuert die Steuereinrichtung 8 die IR- Beleuchtungseinrichtung 7 und die PMD-Zellen Pkl des Imager-Chips 6 gekoppelt an, so dass bereits in dem Halbleitermaterial der PMD-Zellen Pkl eine Trennung mit Hilfe einer Ladungsträgerschaukel in Abhängigkeit der durch den unterschiedlichen Gangunterschied aufgetretenen Phasenverschiebung erfolgt. Die PMD-Zellen liefern hierbei ein Helligkeitsbildsignal mit geringem Kontrast im Grauwertbild und Entfernungsangaben.

Die Imager-Pixel Bij und PMD-Zellen Pkl sind auf dem Imager-Chip 6 in bekannter räumlicher Anordnung zueinander angebracht, so dass die von ihnen ausgegebenen Signale bij und pkl von der Steuereinrichtung 8 bzw. der Auswerteeinrichtung 10 entsprechend einander zugeordnet werden können.

Gemäß der Ausführungsform der Fig. 3 sind die Imager-Pixel Bij in der 2D-Matrix-Anordnung vorgesehen und jeweils einige, z.B. neun benachbarte Imager-Pixel durch eine PMD-Zelle Pkl ersetzt sind. Grundsätzlich wäre auch ein Ersatz jeweils eines Imager-Pixels Bij durch genau eine PMD-Zelle Pkl möglich; im Allgemeinen sind PMD-Zellen jedoch größer dimensioniert und erlauben von daher eine geringere örtliche Auflösung. Gemäß Fig. 3 bilden die PMD-Zellen Pkl selbst wiederum eine Matrix-Anordnung, d.h. sie sind gleichmäßig in der Bij-Matrix verteilt angeordnet und erfassen daher in der vertikalen und horizontalen Richtung jeweils gleichmäßig beabstandete Punkte im Erfassungsbereich 5. Somit können über den gesamten Imager-Chip 6 in bestimmten Abständen Entfernungen bzw. Tiefen gemessen werden.

Fig. 4 zeigt eine weitere Ausführungsform, bei der die PMD-Zellen Pkl lediglich in einem Teilbereich des Imager-Chips 6, z.B. dem oberen Bereich angeordnet sind und dort z.B. wiederum eine gleichmäßige Verteilung darstellen. Aufgrund der optischen Abbildung durch die Optikeinrichtung 12 nimmt der in Fig. 4 oben dargestellte Teilbereich des Imager-Chips 6 somit den unteren Bildbereich bzw. den unteren Erfassungsbereich 5 mit der Fahrbahn 3 und im allgemeinen auch sämtlichen Objekten 01, 02, 03 auf. Somit wird mit dem Imager-Chip der Fig. 4 die untere Bildhälfte vermessen und gegebenenfalls die Tiefenmessung anhand der Objekterkennung über den Horizont gezogen.

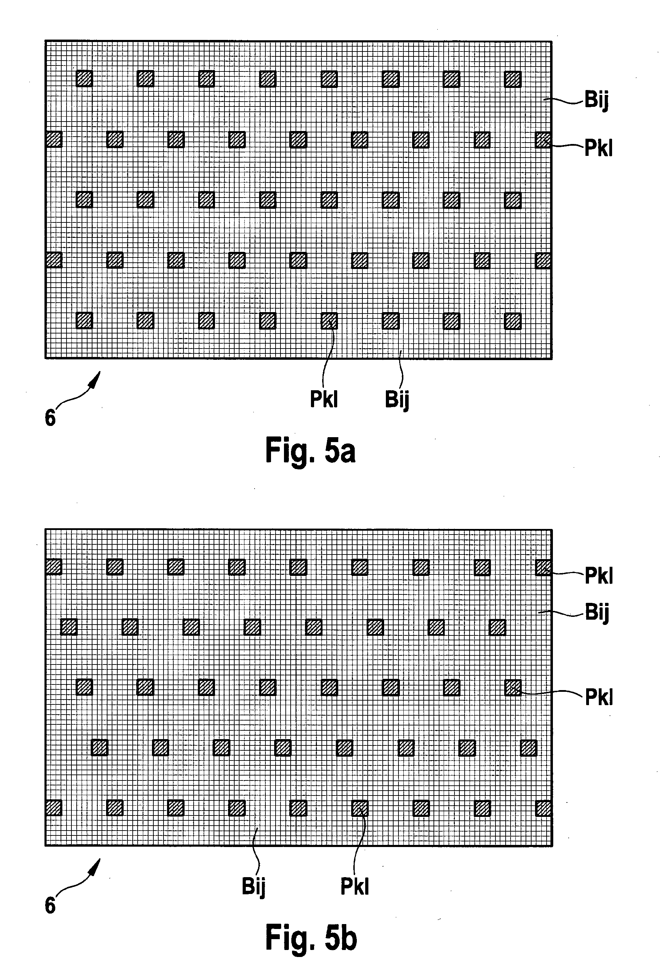

Die Imager-Pixel Bij des Imager-Chips 6 ermöglichen z.B. eine Auflösung von 1/20 Grad. Falls z.B. jedes zwanzigste Bildaufnahmepixel Bij durch eine PMD-Zelle Pkl ersetzt ist, wird durch die PMD-Zellen Pkl somit eine Tiefenabtastung von 1 Grad Auflösung ermöglicht. Bei einer Reichweite von ca. 25 m für das PMD entspricht dies einer Entfernung von 43 cm zwischen den PMD-Messstrahlen bzw. den durch die PMD-Messung gebildeten Tiefenabtastpunkten bzw. Tiefenabtaststützstellen. Da bei einem derartigen Rastermaß gegebenenfalls ein Fußgänger nicht erfasst werden könnte, können die PMD-Zellen Pkl gemäß Fig. 5a oder 5b gegeneinander versetzt angeordnet sein, d.h. die einzelnen Zeilen der PMD-Zellen Pkl sind gegeneinander versetzt. Fig. 5a zeigt eine mittige Versetzung bei jeder zweiten Zeile mit PMD-Zellen Pkl, Fig. 5b eine stufenweise Versetzung über vier Zeilen hinweg. Ein Fußgänger kann zwar eventuell zwischen zwei aufeinander folgenden PMD-Zellen Pkl, P(k+1)I derselben Zeile mit Zeilennummer 1 nicht erfasst werden; aufgrund seiner größeren vertikalen Erstreckung wird er jedoch voraussichtlich von den PMD-Zellen Pk(I+1) oder Pk(I+2) der benachbarten Zeilen mit Zeilennummern I+1, I+2 erfasst.

Da die PMD-Zellen Pkl möglichst gesättigt betrieben werden und somit relativ helle Bildwert ausgeben, die helle Flecken im ausgegebenen Bild darstellen, kann von der Auswerteeinrichtung 10 eine Tote-Pixel-Korrektur als Bildverarbeitungsalgorithmus durchgeführt werden. Die Auswerteeinrichtung 10 verwendet somit als solche bekannte Algorithmen, um die durch die PMD-Zellen Pkl ersetzten Bildaufnahmepixel durch Interpolationsverfahren oder bei bekannter Kennlinie des Imagers aus Ableitung von Grauwerten zu ersetzen.

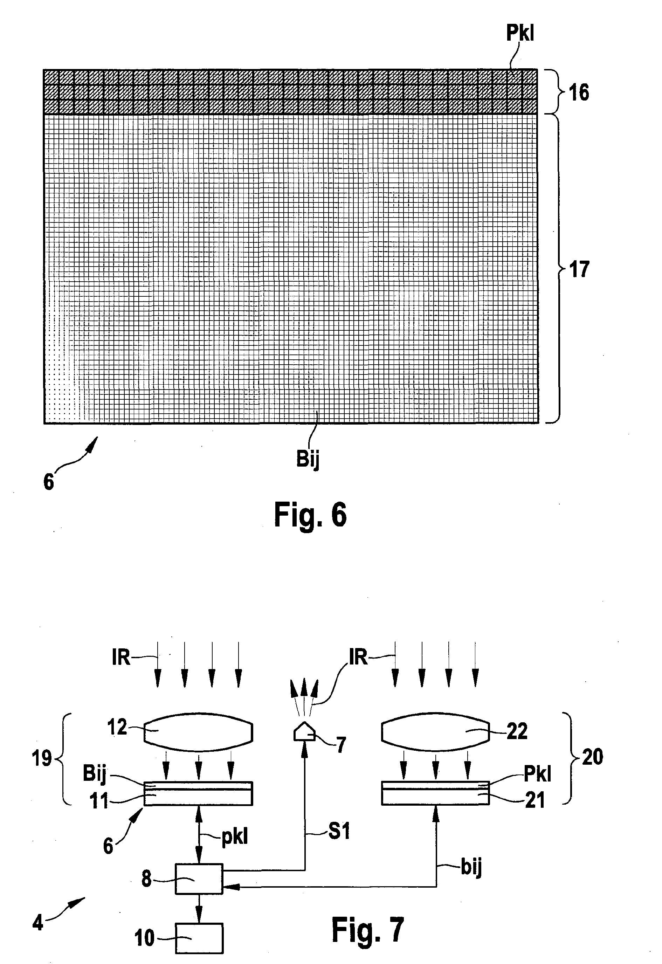

Fig. 6 zeigt eine weitere Ausführungsform, bei der die PMD-Zellen Pkl in einem separaten Bereich 16 angeordnet und die Imager-Pixel Bij somit durch diese nicht gestört werden oder (anders als gezeigt) einige wenige PMD-Zellen Pkl in der Matrix der Bij angeordnet sind. Somit kann z.B. ein PMD-Array 16 an den Imager-Bereich 17 mit den Imager-Pixeln Bij angesetzt werden. Eine derartige Ausführungsform kann z.B. gewählt werden, wenn die Störung des Bildes durch die PMD-Zellen ein für die Funktion nicht mehr akzeptables Maß überschreitet. Der PMD-Bereich 16 ist vorteilhafterweise so positioniert, dass der untere Erfassungsbereich 5, d.h. der untere Bildbereich erfasst wird, so dass wiederum aufgrund der Abbildung durch die Optikeinrichtung 12 im Allgemeinen der obere Teil des Imager-Chips 6 genommen wird. Auch bei dieser Ausführungsform ist durch die fixe Integration bei der bekannten Optikeinrichtung 12 automatisch die Kreuzkalibrierung zwischen dem von den Imager-Pixeln Bij erzeugten Bild und den Tiefenwerten der PMD-Zellen PkI gegeben, so dass die Tiefenmesswerte den Bildbereichen zugeordnet werden können.

Fig. 7 zeigt eine zu Fig. 2 alternative Ausführungsform, bei der der Imager-Chip 6 mit der Optikeinrichtung 12 eine Imager-Kamera 19 bildet und weiterhin eine separate PMD-Kamera 20 vorgesehen ist, die z. B. auch räumlich von der Imager-Kamera 19 getrennt am Fahrzeug 2 angebracht sein kann. Die PMD-Kamera 20 weist z. B. einen PMD-Chip 21 auf; sie kann vorteilhafterweise eine eigene Optikeinrichtung 22 aufweisen, die die reflektierte IR-Strahlung IR auf den PMD-Chip 21 bündelt.

Somit können bei dieser Ausführungsform die Imager-Kamera 19 und die PMD-Kamera 20 als getrennte Module hergestellt und am oder im Fahrzeug 2 angebracht werden. Die IR-Beleuchtungseinrichtung 7 kann als weiteres Modul im oder am Fahrzeug 2 angebracht werden.

Bei der Ausführungsform der Fig. 7 ist grundsätzlich zunächst eine vollständig getrennte Auswertung möglich, so dass separate Steuereinrichtungen 8 und Auswerteeinrichtungen 10 für die Imager-Kamera 19 und die PMD-Kamera 20 vorgesehen sind. Weiterhin ist jedoch auch bei dieser Ausführungsform eine gemeinsame Auswertung und Verwendung für gemeinsame Funktionen entsprechend der oben mit Bezug zu der Ausführungsform der Figuren 2 bis 6 beschriebenen Funktionen möglich. Hierbei ist allerdings keine Kreuzkorrelation zwischen den Kameras 19 und 20 gegeben, so dass die Erstellung eines kombinierten Bildes erschwert ist.

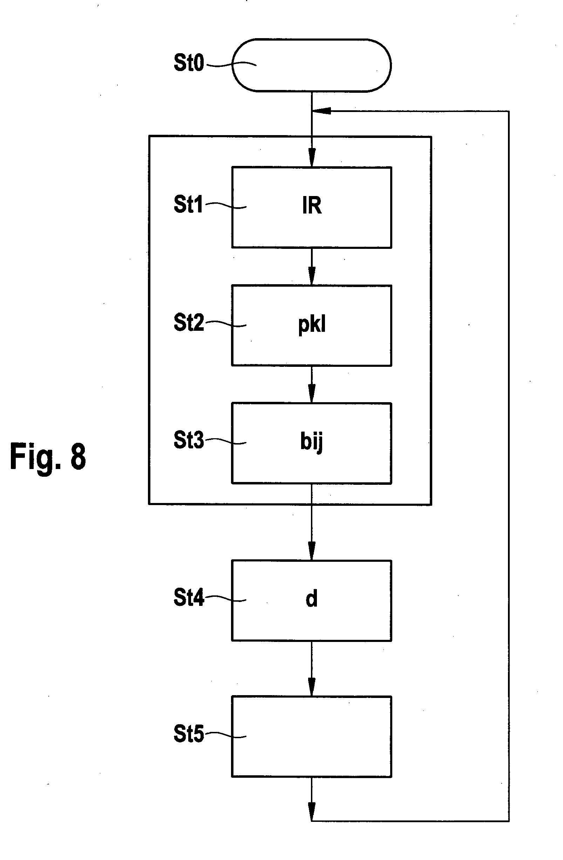

Das erfindungsgemäße Verfahren zur Bilderfassung und Bilderstellung wird gemäß dem Flussdiagramm der Fig. 8 in Schritt St0 bei Aktivierung des Kamerasystems 4, z.B. bei Anschalten der Zündung oder Start des Motors gestartet. In Schritt St1 werden von der Steuereinrichtung 8 Ansteuersignale S1 erzeugt und an die IR-Beleuchtungseinrichtung 7 ausgegeben, die daraufhin IR-Strahlung IR als Überlagerung eines kontinuierlichen Signals (für die Imager-Pixel Bij) und eines modulierten Signals (für die PMD-Zellen PkI) erzeugt und in den Erfassungsbereich 5 des Kamerasystems 4 ausstrahlt.

In Schritt St2 werden reflektierte IR-Strahlen von den PMD-Zellen Pkl aufgenommen und hieraus PMD-Signale pkl mit Helligkeits- und Laufzeitwerten (Entfernungsangaben) ausgegeben.

Gleichzeitig oder unabhängig davon wird gemäß Schritt St3 von den Imager-Pixeln Bij des Imager-Chips 6 fortlaufend reflektierte IR-Stahlung aufgenommen und Bildsignale bij und an die Auswerteeinrichtung 10 ausgegeben.

Die Schritte St1 und St2, St3 laufen hierbei gleichzeitig bzw. parallel ab, wobei bei der Ausführungsform der Fig. 2 bis 6 die Pixel Bij und Zellen Pkl im Allgemeinen sukzessive ausgelesen werden.

In Schritt St4 erfolgt die Auswertung, bei der auch die Tiefe bzw. Abstand d bestimmt werden kann. Bei der Ausführungsform der Fig. 3 bis 6 werden in Schritt St4 werden die Signale bij und pkl einander aufgrund der bekannten Kreuzkorrelation durch die Integration auf dem Imager-Chip 6 zugeordnet, so dass die Entfernungsdaten d der PMD-Signale pkl auch den Bildsignalen bij der Imagerpixel Bij zugeordnet werden können.

In Schritt St5 erfolgt die Bildausgabe an den Fahrer, z.B. auf einem Display im Dashboardbereich oder auch z. B. durch Projektion an die Windschutzscheibe. Weiterhin kann in Schritt St5 auch aufgrund einer Auswertung die Ausgabe eines Warnsignals und/oder ein Eingriff in die Fahrdynamik einschließlich Bremseneingriff erfolgen.

Wie durch die Schleife des Flussdiagramms der Fig. 8 angedeutet, verläuft das Verfahren hierbei fortlaufend.

## Patentansprüche

1. Kamerasystem (4) für ein Fahrzeug, wobei das Kamerasystem (4) mindestens aufweist:
- eine Infrarot-Beleuchtungseinrichtung (7) zur Aussendung von IR-Strahlung (IR) in einen Erfassungsbereich (5),
- eine Steuereinrichtung (8) zur Ansteuerung der Infrarot-Beleuchtungseinrichtung (7),
- eine Imager-Kamera (6, 19) mit Imagerpixeln (Bij) zur Aufnahme von aus dem Erfassungsbereich (5) reflektierter IR-Strahlung (IR) und zur Ausgabe von Bildsignalen (bij),
- eine Messeinrichtung (20) zur Tiefenbestimmung durch Messung von IR-Strahlung (IR), mit Mess-Zellen (Pkl) zur Entfernungsbestimmung
- wobei die Infrarot-Beleuchtungseinrichtung (7) IR-Strahlung (IR) sowohl für die
Imager-Kamera (6, 19) als auch für die Messeinrichtung (Pkl, 20) aussendet,
**dadurch gekennzeichnet, dass** die Steuereinrichtung (8) die Infrarot-Beleuchtungseinrichtung (7) mit einem Ansteuersignal so ansteuert, dass die ausgestrahlte IR-Strahlung (IR) eine Überlagerung von modulierter Strahlung für die Messeinrichtung (Pkl, 20) und kontinuierlicher Strahlung für die Imager-Kamera (6, 19) ist.

2. Kamerasystem nach Anspruch 1, **dadurch gekennzeichnet, dass** die von der Imager-Kamera (6, 19) und der Messeinrichtung (Pkl, 20) detektierte IR-Strahlung in gleichen oder sich überlappenden Wellenlängenbereichen, vorzugsweise im Nah-Infrarotbereich bei 800 bis 2000 nm liegt.

3. Kamerasystem nach Anspruch 1 oder 2, **dadurch gekennzeichnet, dass** die Messeinrichtung (Pkl, 20) PMD-Zellen zur Tiefenbestimmung durch Laufzeitmessung von infraroter Strahlung (IR) aufweist.

4. Kamerasystem nach einem der vorherigen Ansprüche, **dadurch gekennzeichnet, dass**
- die Messeinrichtung (Pkl) und die Imager-Kamera (6) als eine Baueinheit ausgebildet sind,
- eine Steuereinrichtung (8) zur Ansteuerung der Messeinrichtung (Pkl), der Imager-Kamera (6) und der Beleuchtungseinrichtung (7) vorgesehen ist.

5. Kamerasystem nach Anspruch 4, **dadurch gekennzeichnet, dass**
- auf einem Imager-Halbleiterbauelement sowohl eine zweidimensionale Anordnung von Imager-Pixeln (Bij) als auch Mess-Zellen (Pkl) für die Entfernungsbestimmung integriert sind,
- eine Auswerteeinrichtung (10) zur Aufnahme und Auswertung der von den Imager-Pixeln (Bij) ausgegebenen Bildsignale (bij) und der von den Mess-Zellen (Pkl) ausgegebenen Mess-Zellen-Signale (pkl) und zur Auswertung von Entfernungsinformationen in den Mess-Zellen-Signalen (pkl) und zur Zuordnung von Entfernungsinformationen zu den Imager-Pixeln (Bij) vorgesehen ist, und
- die Auswerteeinrichtung (10) aus den Bildsignalen (bij) der Imager-Pixel (Bij) und den Mess-Zellen-Signalen (pkl) der Mess-Zellen (Pkl) ein kombiniertes Bild mit Bild- und Tiefendarstellung erstellt.

6. Kamerasystem nach Anspruch 5, **dadurch gekennzeichnet, dass** die Imager-Pixel (Bij) in einer Matrix-Anordnung angeordnet sind, in der ein oder mehrere Mess-Zellen (Pkl) für die Tiefenbestimmung auf jeweils einer Matrixstelle oder mehreren benachbarten Matrixstellen angeordnet sind.

7. Kamerasystem nach Anspruch 6, **dadurch gekennzeichnet, dass** zumindest einige Mess-Zellen (Pkl) von Imager-Pixeln (Bij) umgeben sind.

8. Kamerasystem nach Anspruch 6 oder 7, **dadurch gekennzeichnet, dass** die Mess-Zellen (Pkl) in einer Matrixanordnung aus Zeilen und Spalten mit gegenüber der Matrixanordnung der Imager-Pixel (Bij) vielfachem Abstand angeordnet sind.

9. Kamerasystem nach einem der Ansprüche 6 bis 8, **dadurch gekennzeichnet, dass** die Mess-Zellen (Pkl) in Zeilen oder Spalten angeordnet sind, die zu benachbarten Zeilen oder Spalten mit Mess-Zellen (Pkl) versetzt sind.

10. Kamerasystem nach einem der Ansprüche 5 bis 9, **dadurch gekennzeichnet, dass** die Mess-Zellen (Pkl) nur in einem Teilbereich der zweidimensionalen Anordnung von Imager-Pixeln (Bij) angeordnet sind.

11. Kamerasystem nach einem der Ansprüche 5 bis 10, **dadurch gekennzeichnet, dass** zumindest ein Teil der Mess-Zellen (Pkl) in einem separaten Mess-Zellen-Bereich (16), z.B. als Mess-Zellen-Matrix, angeordnet sind, der an einen Imagerpixel-Bereich (17) mit den Imager-Pixeln (Bij) angrenzt.

12. Kamerasystem nach einem der Ansprüche 5 bis 11, **dadurch gekennzeichnet, dass** die Imager-Pixel (Bij) und die Mess-Zellen (Pkl) als CCD-Elemente und/oder CMOS-Elemente auf einem gemeinsamen Substrat (11) integriert sind.

13. Kamerasystem nach einem der Ansprüche 1 bis 3, **dadurch gekennzeichnet, dass** die Imager-Kamera (19) und die Messeinrichtung (20) als separate Module ausgebildet sind.

14. Verfahren zum Erstellen von Bildern unter Verwendung eines Kamerasystems nach einem der vorherigen Ansprüche, bei dem
- eine Infrarot-Beleuchtungseinrichtung (7) einen Erfassungsbereich (5) mit IR-Strahlung (IR) beleuchtet,
- Imagerpixel (Bij) einer Imager-Kamera (6, 19) reflektierte Anteile der ausgesandten IR-Strahlung (IR) aufnehmen und Imager-Bildsignale (bij) ausgeben,
- die Messeinrichtung (Pkl, 20) zur Tiefenbestimmung reflektierte Anteile der ausgesandten IR-Strahlung (IR) aufnimmt und Mess-Signale (pkl) ausgibt, und
- die Imager-Bildsignale (bij) und Mess-Signale (pkl) nachfolgend separat oder
zusammen ausgewertet werden,
**dadurch gekennzeichnet, dass** die Infrarot-Beleuchtungseinrichtung (7) mit einem Ansteuersignal so angesteuert wird, dass sie eine Überlagerung von modulierter IR-Strahlung für die Messeinrichtung (Pkl, 20) und kontinuierlicher IR-Strahlung für die Imager-Kamera (6, 19) ausstrahlt.

15. Verfahren nach Anspruch 14, **dadurch gekennzeichnet, dass**
- Imagerpixel-Bildsignale (bij) der Imager-Pixel (Bij) der Imager-Kamera (6, 19) ausgelesen werden,
- Mess-Zellen-Signale (pkl) der Mess-Zellen (Pkl) des Imager-Halbleiterbauelementes (6) ausgelesen werden,
- aus den Mess-Zellen-Signalen (pkl) Entfernungsinformationen (d) ermittelt werden,
und
- ein kombiniertes Bild aus Imager-Bildsignalen (bij) und Tiefenangaben (d) erstellt und auf einer Anzeigeeinrichtung ausgegeben wird.

16. Verfahren nach Anspruch 15, **dadurch gekennzeichnet, dass** aus den ermittelten Entfernungsinformationen (d) der Mess-Zellen-Signale (pkl) aus einer bekannten Kreuzkorrelation Entfernungsinformationen (d) für die Bildsignale (bij) der Imager-Pixel (Bij) ermittelt werden und in dem ausgegebenen Bild die Bildsignale (bij) mit den ermittelten Entfernungsinformationen (d) dargestellt werden.

17. Verfahren nach Anspruch 15 oder 16, **dadurch gekennzeichnet, dass** zu Matrixstellen der zweidimensionalen Matrix von Imager-Pixeln (Bij), die durch Mess-Zellen (Pkl) ersetzt sind, Bildwerte mittels Interpolation aus Bildsignalen (bij) der umgebenden Imager-Pixel (Bij) ermittelt werden.

18. Verfahren nach Anspruch 17, **dadurch gekennzeichnet, dass** zu den Matrixstellen der Mess-Zellen (Pkl) Bildwerte durch einen Bildalgorithmus mit einer Tote-Pixel-Korrektur ermittelt werden, bei dem zeitlich sich nicht ändernde Bildsignale als fehlerhaft erkannt und durch eine Interpolation ersetzt werden.

19. Verfahren nach einem der Ansprüche 15 bis 18, **dadurch gekennzeichnet, dass** von der Beleuchtungseinrichtung (7) modulierte Strahlung (IR) ausgegeben wird und die als PMD-Zellen ausgebildeten Mess-Zellen (Pkl) des Imager-Halbleiterbauelementes (6) mit einem Referenzsignal angesteuert werden.

## Claims

1. Camera system (4) for a vehicle, wherein the camera system (4) at least comprises:
- an infrared illumination apparatus (7) for emitting IR radiation (IR) into a capture region (5),
- a control apparatus (8) for actuating the infrared illumination apparatus (7),
- an imager camera (6, 19) with imager pixels (Bij) for recording IR radiation (IR) reflected from the capture region (5) and for emitting image signals (bij), and
- a measuring apparatus (20) for determining the depth by measuring IR radiation (IR), with measuring cells (Pkl) for determining the distance,
- wherein the infrared illumination apparatus (7) emits IR radiation (IR) for both the imager camera (6, 19) and the measuring apparatus (Pkl, 20),
**characterized in that** the control apparatus (8) actuates the infrared illumination apparatus (7) by means of an actuation signal in such a way that the emitted IR radiation (IR) is a superposition of modulated radiation for the measuring apparatus (Pkl, 20) and continuous radiation for the imager camera (6, 19).

2. Camera system according to Claim 1, **characterized in that** the IR radiation detected by the imager camera (6, 19) and the measuring apparatus (Pkl, 20) lies in the same or in overlapping wavelength regions, preferably in the near infrared region between 800 and 2000 nm.

3. Camera system according to Claim 1 or 2, **characterized in that** the measuring apparatus (Pkl, 20) has PMD cells for determining the depth by measuring the run time of infrared radiation (IR).

4. Camera system according to one of the preceding claims, **characterized in that**
- the measuring apparatus (Pkl) and the imager camera (6) are configured as one component, and
- provision is made for a control apparatus (8) for actuating the measuring apparatus (Pkl), the imager camera (6) and the illumination apparatus (7).

5. Camera system according to Claim 4, **characterized in that**
- both a two-dimensional arrangement of imager pixels (Bij) and measuring cells (Pkl) for determining the distance are integrated on an imager semiconductor component,
- provision is made for an evaluation apparatus (10) for recording and evaluating the image signals (bij) emitted by the imager pixels (Bij) and the measuring cell signals (pkl) emitted by the measuring cells (Pkl) and for evaluating distance information in the measuring cell signals (pkl) and for assigning distance information to the imager pixels (Bij), and
- the evaluation apparatus (10) creates a combined image with an image and depth display from the image signals (bij) of the imager pixels (Bij) and the measuring cell signals (pkl) of the measuring cells (Pkl).

6. Camera system according to Claim 5, **characterized in that** the imager pixels (Bij) are arranged in a matrix arrangement, in which one or more measuring cells (Pkl) for determining the depth are respectively arranged at one matrix location or at a plurality of adjacent matrix locations.

7. Camera system according to Claim 6, **characterized in that** at least some measuring cells (Pkl) are surrounded by imager pixels (Bij).

8. Camera system according to Claim 6 or 7, **characterized in that** the measuring cells (Pkl) are arranged in a matrix arrangement of rows and columns with a multiple spacing compared to the matrix arrangement of the imager pixels (Bij).

9. Camera system according to one of Claims 6 to 8, **characterized in that** the measuring cells (Pkl) are arranged in rows or columns, which are offset with respect to adjacent rows or columns with measuring cells (Pkl).

10. Camera system according to one of Claims 5 to 9, **characterized in that** the measuring cells (Pkl) are only arranged in a portion of the two-dimensional arrangement of imager pixels (Bij).

11. Camera system according to one of Claims 5 to 10, **characterized in that** at least some of the measuring cells (Pkl) are arranged in a separate measuring cell region (16), e.g. as measuring cell matrix, which is adjacent to an imager pixel region (17) with the imager pixels (Bij).

12. Camera system according to one of Claims 5 to 11, **characterized in that** the imager pixels (Bij) and the measuring cells (Pkl) are integrated on a common substrate (11) as CCD elements and/or CMOS elements.

13. Camera system according to one of Claims 1 to 3, **characterized in that** the imager camera (19) and the measuring apparatus (20) are configured as separate modules.

14. Method for creating images using a camera system according to one of the preceding claims, in which
- an infrared illumination apparatus (7) illuminates a capture region (5) with IR radiation (IR),
- imager pixels (Bij) of an imager camera (6, 19) record reflected portions of the emitted IR radiation (IR) and emit imager image signals (bij),
- the measuring apparatus (Pkl, 20) for determining the depth records reflected portions of the emitted IR radiation (IR) and emits measuring signals (pkl), and
- the imager image signals (bij) and measuring signals (pkl) are subsequently evaluated separately or together,
**characterized in that** the infrared illumination apparatus (7) is actuated by an actuation signal in such a way that it emits a superposition of modulated IR radiation for the measuring apparatus (Pkl, 20) and continuous IR radiation for the imager camera (6, 19).

15. Method according to Claim 14, **characterized in that**
- imager pixel image signals (bij) of the imager pixels (Bij) of the imager camera (6, 19) are read out,
- measuring cell signals (pkl) of the measuring cells (Pkl) of the imager semiconductor component (6) are read out,
- distance information (d) is established from the measuring cell signals (pkl), and
- a combined image of imager image signals (bij) and depth specifications (d) is created and output on a display apparatus.

16. Method according to Claim 15, **characterized in that** distance information (d) for the image signals (bij) of the imager pixels (Bij) is established from the established distance information (d) from the measuring cell signals (pkl) using a known cross-correlation and the image signals (bij) with the established distance information (d) are displayed in the output image.

17. Method according to Claim 15 or 16, **characterized in that** image values are established by means of interpolation from image signals (bij) from the surrounding imager pixels (Bij) for matrix locations of the two-dimensional matrix of imager pixels (Bij) which are replaced by measuring cells (Pkl).

18. Method according to Claim 17, **characterized in that** image values are established for the matrix locations of the measuring cells (Pkl) by an image algorithm with dead-pixel correction, in which temporally non-varying image signals are identified as incorrect and replaced by interpolation.

19. Method according to one of Claims 15 to 18, **characterized in that** modulated radiation (IR) is emitted by the illumination apparatus (7) and the measuring cells (Pkl), embodied as PMD cells, of the imager semiconductor component (6) are actuated by a reference signal.

## Revendications

1. Système (4) de caméra pour véhicule, le système (4) de caméra présentant au moins :
un dispositif (7) d'éclairage en infrarouge qui émet un rayonnement IR (IR) dans une zone de saisie (5),
un dispositif de commande (8) qui commande le dispositif (7) d'éclairage dans l'infrarouge,
une caméra (6, 19) d'imagerie présentant des pixels d'imagerie (Bij) et qui enregistre le rayonnement IR (IR) réfléchi par la zone de saisie (5) et émet des signaux d'image (bij),
un dispositif de mesure (20) qui détermine la profondeur par mesure du rayonnement IR (IR) et doté de cellules de mesure (Pkl) qui déterminent la distance,
le dispositif (7) d'éclairage dans l'infrarouge émettant un rayonnement IR (IR) à la fois pour la caméra d'imagerie (6, 19) et pour le dispositif de mesure (Pkl, 20),
**caractérisé en ce que**
le dispositif de commande (8) commande le dispositif d'éclairage (7) dans l'infrarouge par un signal de commande et
**en ce que** le rayonnement IR (IR) émis est une superposition d'un rayonnement modulé pour le dispositif de mesure (Pkl, 20) et d'un rayonnement continu pour la caméra d'imagerie (6, 19).

2. Système de caméra selon la revendication 1, **caractérisé en ce que** le rayonnement IR détecté par la caméra d'imagerie (6, 19) et le dispositif de mesure (Pkl, 20) est situé dans la même plage de longueur d'onde ou dans des plages de longueur d'onde superposées, de préférence dans l'infrarouge proche de 800 à 2 000 nm.

3. Système de caméra selon les revendications 1 ou 2, **caractérisé en ce que** le dispositif de mesure (Pkl, 20) présente des cellules PMD de détermination de profondeur par mesure du temps de parcours du rayonnement infrarouge (IR).

4. Système de caméra selon l'une des revendications précédentes, **caractérisé en ce que** le dispositif de mesure (Pkl) et la caméra d'imagerie (6) sont configurés comme entités et **en ce qu'**un dispositif de commande (8) qui commande le dispositif de mesure (Pkl), la caméra d'imagerie (6) et le dispositif d'éclairage (7) est prévu.

5. Système de caméra selon la revendication 4, **caractérisé en ce qu'**à la fois un ensemble bidimensionnel de pixels d'imagerie (Bij) et des cellules de mesure (Pkl) servant à la détermination de la distance sont intégrés dans un composant semi-conducteur d'imagerie, **en ce qu'**un dispositif d'évaluation (10) qui enregistre et évalue les signaux d'image (bij) délivrés par les pixels d'imagerie (Bij) et les signaux de cellules de mesure (pkl) délivrés par les cellules de mesure (Pkl) et qui évalue les informations de distance dans les signaux (pkl) des cellules de mesure et attribue les informations de distance aux pixels d'imagerie (Bij) est prévu et **en ce que** le dispositif d'évaluation (10) forme une image combinée qui représente une image et une profondeur à partir des signaux d'image (bij) des pixels d'imagerie (Bij) et des signaux (pkl) des cellules de mesure des cellules de mesure (Pkl).

6. Système de caméra selon la revendication 5, **caractérisé en ce que** les pixels d'imagerie (Bij) sont disposés dans un agencement en matrice dans lequel une ou plusieurs cellules de mesure (Pkl) de détermination de distance sont disposées chacune en un emplacement de matrice ou en plusieurs emplacements de matrice voisins.

7. Système de caméra selon la revendication 6, **caractérisé en ce qu'**au moins certaines cellules de mesure (Pkl) sont entourées par des pixels d'imagerie (Bij).

8. Système de caméra selon les revendications 6 ou 7, **caractérisé en ce que** les cellules de mesure (Pkl) sont disposées en un agencement en matrice constitué de lignes et de colonnes situées à une distance multiple de celles de l'agencement en matrice des pixels d'imagerie (Bij).

9. Système de caméra selon l'une des revendications 6 à 8, **caractérisé en ce que** les cellules de mesure (Pkl) sont disposées en lignes ou en colonnes décalées par rapport aux lignes ou colonnes voisines de cellules de mesure (Pkl).

10. Système de caméra selon l'une des revendications 5 à 9, **caractérisé en ce que** les cellules de mesure (Pkl) sont disposées uniquement dans une partie de l'agencement bidimensionnel de pixels d'imagerie (Bij).

11. Système de caméra selon l'une des revendications 5 à 10, **caractérisé en ce qu'**au moins une partie des cellules de mesure (Pkl) sont disposées dans une partie séparée (16) de cellules de mesure, par exemple sous la forme d'une matrice de cellules de mesure qui est adjacente à une partie (17) de pixels d'imagerie dotée des pixels d'imagerie (Bij).

12. Système de caméra selon l'une des revendications 5 à 11, **caractérisé en ce que** les pixels d'imagerie (Bij) et les cellules de mesure (Pkl) sont intégrées en tant qu'éléments CCD et/ou éléments CMOS sur un substrat commun (11).

13. Système de caméra selon l'une des revendications 1 à 3, **caractérisé en ce que** la caméra d'imagerie (19) et le dispositif de mesure (20) sont configurés comme modules séparés.

14. Procédé de formation d'images par recours à un système de caméra selon l'une des revendications précédentes, dans lequel :
un dispositif (7) d'éclairage dans l'infrarouge éclaire une zone de saisie (5) par un rayonnement IR (IR),
des pixels d'imagerie (Bij) d'une caméra d'imagerie (6, 19) enregistrent la partie réfléchie du rayonnement IR (IR) émis et délivrent des signaux d'image (bij) d'imagerie,
le dispositif de mesure (Pkl, 20) enregistre les parties réfléchies du rayonnement IR (IR) émis pour déterminer la profondeur et délivre des signaux de mesure (pkl) et
les signaux d'image (bij) d'imagerie et les signaux de mesure (pkl) sont évalués séparément en succession ou ensemble,
**caractérisé en ce que**
le dispositif (7) d'éclairage dans l'infrarouge est commandé par un signal de commande de telle sorte qu'il émette une superposition d'un rayonnement IR modulé pour le dispositif de mesure (Pkl, 20) et d'un rayonnement IR continu pour la caméra d'imagerie (6, 19).

15. Procédé selon la revendication 14, **caractérisé en ce que**
les signaux d'image (bij) des pixels d'imagerie (Bij) de la caméra d'imagerie (6, 19) sont lus,
les signaux (pkl) des cellules de mesure (Pkl) du composant semi-conducteur d'imagerie (6) sont lus,
des informations de distance (d) sont déterminées à partir des signaux (pkl) de cellules de mesure et
une image combinée constituée de signaux d'image (bij) d'imagerie et de données de profondeur (d) est formée et délivrée sur un dispositif d'affichage.

16. Procédé selon la revendication 15, **caractérisé en ce que** des informations de distance (d) pour les signaux d'image (bij) des pixels d'imagerie (Bij) sont déterminées à partir des informations de distance (d) des signaux (pkl) des cellules de mesure à partir d'une corrélation croisée connue et **en ce que** les signaux d'image (bij) dotés des informations de distance (d) ainsi déterminés sont représentés dans l'image délivrée.

17. Procédé selon les revendications 15 ou 16, **caractérisé en ce que** des valeurs d'image sont déterminées aux emplacements de la matrice bidimensionnelle de pixels d'imagerie (Bij) remplacés par des cellules de mesure (Pkl), par interpolation entre les signaux d'image (bij) des pixels d'imagerie (Bij) environnants.

18. Procédé selon la revendication 17, **caractérisé en ce que** des valeurs d'image des emplacements de la matrice de cellules de mesure (Pkl) sont déterminées par un algorithme d'image à correction de pixels morts dans lequel les signaux d'image ne se modifiant pas au cours du temps sont détectés comme défectueux et remplacés par une interpolation.

19. Procédé selon l'une des revendications 15 à 18, **caractérisé en ce qu'**un rayonnement (IR) modulé est délivré par le dispositif d'éclairage (7) et **en ce que** les cellules de mesure (Pkl) du composant semi-conducteur d'imagerie (6) configurées comme cellules PMD sont commandées par un signal de référence.
